Europäisches Patentamt

European Patent Office

Office européen des brevets

(11) Numéro de publication: **0 154 364**

**A1**

# (12) DEMANDE DE BREVET EUROPEEN

(21) Numéro de dépôt: 85200144.5

(22) Date de dépôt: 08.02.85

(51) Int. Cl.⁴: **B 66 F 9/19**
**A 01 G 23/00**

(30) Priorité: 20.02.84 FR 8402639

(43) Date de publication de la demande:
11.09.85 Bulletin 85/37

(84) Etats contractants désignés:
AT BE CH DE GB IT LI LU NL SE

(71) Demandeur: **Marty, Didier**
**6, rue Clémence Isaure**
**F-31000 Toulouse(FR)**

(71) Demandeur: **Barreau, Gilles**
**"La Gembrière" Chemin de la Reule Gragnague**
**F-31380 Montastruc La Conseillere(FR)**

(72) Inventeur: **Marty, Didier**
**6, rue Clémence Isaure**
**F-31000 Toulouse(FR)**

(72) Inventeur: **Barreau, Gilles**
**"La Gembrière" Chemin de la Reule Gragnague**
**F-31380 Montastruc La Conseillere(FR)**

(74) Mandataire: **Barre, Philippe**
**Cabinet Barre-Gatti-Laforgue 95 rue des Amidonniers**
**F-31069 Toulouse Cédex(FR)**

(54) **Engin et materiél de manutention et le cas échéant de bottelage de matériaux solides divisés, en particulier bûches de bois, parties constitutives et procédé de manutention de bûches mis en oeuvre au moyen dudit engin.**

(57) L'engin de manutention visé par l'invention est composé d'une forme (1) de réception de matériaux solides divisés et d'un support de forme (2), en particulier manoeuvrable par le système de relevage trois points d'un tracteur ; le support (2) comprend deux paires de demi-paliers (15a, 16a), cependant que la forme comprend deux paires de pivots (31a, 32a) aptes à coopérer avec les demi-paliers précités. La forme est dotée en partie basse de moyens de repos au sol (27); elle peut être saisie par le support (2) par engagement de ses quatre pivots dans les quatre demi-paliers du support, en vue d'être transportée en position stable par le support (2). Elle peut également être amenée à pivoter en engageant les deux pivots avant (31a) dans les deux demi-paliers arrière (16a) du support.

Fig. 8c

1

ENGIN ET MATERIEL DE MANUTENTION
ET LE CAS ECHEANT DE BOTTELAGE DE MATERIAUX SOLIDES DIVISES,
EN PARTICULIER BUCHES DE BOIS,
PARTIES CONSTITUTIVES ET PROCEDE DE MANUTENTION DE BUCHES
MIS EN OEUVRE AU MOYEN DUDIT ENGIN.

L'invention concerne un engin et un matériel pour la manutention et le cas échéant le bottelage de matériaux solides divisés ; elle s'applique tout particulièrement mais non exclusivement dans le secteur de la sylviculture pour la manutention, le bottelage et le débardage de bûches de bois. Elle s'étend dans ce secteur à un procédé de manutention de bûches mis en oeuvre au moyen dudit engin.

On sait que l'utilisation du bois comme combustible pour le chauffage domestique ne cesse de croître. Toutefois, cette utilisation est actuellement limitée par le coût des manutentions qui s'effectuent en vrac, bûche par bûche, en raison de l'absence de dispositifs adaptés. Ainsi, du lieu d'exploitation en forêt jusqu'à la livraison sur l'aire de stockage de l'utilisateur, chaque bûche est manipulée de 5 à 9 fois (entraînant un surcoût du produit livré, qui est actuellement de l'ordre de 40,00 F à 60,00 F par stère).

Un objectif essentiel de la présente invention est de fournir un engin permettant de botteler les bûches de bois pour obtenir, à un coût réduit et sur le lieu même d'exploitation, des bottes de volume important, notamment de l'ordre d'un stère, bénéficiant d'une bonne cohésion, afin de réduire les coûts de manutentions en limitant le nombre de manipulations individuelles.

Un autre objectif essentiel de l'invention est de permettre, après réalisation d'une botte, de transporter celle-ci depuis le lieu d'abattage jusqu'au lieu de chargement (route, voie ferrée...) au moyen du même engin, sans manipulation supplémentaire des bûches.

Un autre objectif est de fournir un engin compatible avec une organisation rationnelle du chantier d'abattage, permettant en particulier à un (ou plusieurs) bûcheron de confectionner les bottes, tandis que, de façon indépendante, un ouvrier assure le débardage sans que les ouvriers ou bûcherons soient soumis à des périodes d'attente provenant d'une indisponibilité de l'engin de manutention.

On connaît par ailleurs, dans d'autres secteurs techniques, des dispositifs de manutention de matériaux divisés en vrac, tels par exemple que le dispositif de manutention de maïs au moyen d'un godet basculant, décrit dans le brevet FR n° 2 415 694, ou le dispositif de réception et de vidage par basculement décrit dans le brevet FR n° 2 427 288, ou encore l'appareil pour le transport de raisin au moyen d'un chariot élévateur décrit dans le brevet n° 2 030 917, ou le véhicule à bennes interchangeables décrit dans le brevet n° 1 209 883.

Toutefois, ces dispositifs connus sont inaptes à remplir les trois objectifs ci-dessus mentionnés et leur utilisation ne permet pas de résoudre de façon satisfaisante le problème de la manutention des bûches de bois. De plus, ces dispositifs sont généralement de structures complexes, pourvues de vérins ou organes hydrauliques, ce qui leur confère des prix de revient et coûts d'entretien incompatibles avec l'application sus-évoquée.

La présente invention se propose d'apporter une solution satisfaisante au problème de la manutention des bûches de bois, permettant de satisfaire aux trois objectifs visés : bottelage des bûches dès le début du processus sur le lieu même d'exploitation, transport sur le lieu de chargement sans manipulation supplémentaire des bûches, organisation rationnelle du chantier d'abattage.

D'une façon plus générale, l'invention vise à fournir un nouvel engin permettant d'assurer la manutention et, le cas échéant, le bottelage de matériaux solides divisés, cet engin pouvant être utilisé dans d'autres secteurs où se posent des problèmes analogues à ceux rencontrés dans le secteur du bois.

L'engin de manutention visé par l'invention est composé d'une forme de réception des matériaux et d'un support de forme pourvue de moyens d'accouplement à un système de relevage trois points d'un tracteur (ou de façon plus générale, à tout autre système d'entraînement permettant de soulever ou d'abaisser ledit support et de le déplacer) ;

conformément à la présente invention, ledit engin combine les caractéristiques suivantes :

(a) la forme comporte en partie basse des moyens de repos au sol,

(b) au-dessus du niveau de ces moyens de repos, la forme est pourvue d'un premier système d'appuis sur le support, en vue de son soutien le long d'une zoné située d'un côté de son centre de gravité,

(c) au-dessus du niveau de ces moyens de repos, la forme est pourvue d'un second système d'appuis sur le support, en vue de son soutien le long d'une zone située de l'autre côté de son centre de gravité,

(d) le support est doté d'un premier système de contre-appuis et d'un second système de contre-appuis, adaptés pour pouvoir coopérer respectivement avec le premier système d'appuis et le second système d'appuis de la forme, en vue d'assurer un maintien stable de celle-ci,

(e) lesdits systèmes d'appuis et systèmes de contre-appuis sont adaptés pour pouvoir se dégager lors d'un écartement vertical vers le bas du support par rapport à la forme,

(f) le premier système d'appuis de la forme et le second système de contre-appuis du support sont adaptés pour pouvoir coopérer l'un avec l'autre à la manière de tourillons et demi-paliers, en vue d'autoriser un pivotement de la forme autour d'un axe X défini par les contre-appuis dudit second système,

(g) le support est ouvert du côté de ce second système de contre-appuis, en vue d'autoriser le basculement de la forme autour de l'axe X lorsque le premier système d'appuis est amené à coopérer avec le second système de contre-appuis.

Il est à noter que, pour faciliter la compréhension, l'engin est défini en le supposant dans sa position de chargement, la forme étant disposée sur ces moyens de repos au sol ; les termes de positionnement ou d'orientation (vertical, bas, au-dessus de...) se réfèrent à cette position de référence. De plus, conventionnellement, on désignera par "longitudinal" la direction parallèle au sens de déplacement normal du tracteur et par "transversal" une direction perpendiculaire.

Selon un mode de réalisation avantageux conduisant à une structure simple de très faible coût, les deux systèmes de contre-appuis du support sont identiques et constitués, chacun, par deux demi-paliers s'ouvrant vers le haut et agencés dans l'alignement l'un de l'autre de part et d'autre du support ; de la même façon, les deux systèmes d'appuis de la forme sont identiques et constitués, chacun, par deux pivots, de diamètre adapté aux demi-paliers précités et agencés dans l'alignement de part et d'autre de la forme pour venir en correspondance avec lesdits demi-paliers.

Il convient de souligner que ce mode de réalisation est préféré en pratique, mais n'est pas limitatif : les demi-paliers femelles peuvent le cas échéant être montés sur la forme et les pivots sur le support (dans ce cas, les demi-paliers sont bien entendu ouverts vers le bas). De plus, d'autres systèmes d'appuis et de contre-appuis répondant aux conditions de l'invention (notamment caractéristique f) peuvent être prévus sans sortir du cadre de l'invention.

La forme est en particulier constituée par un berceau ouvert sur sa face supérieure et comprenant deux flancs latéraux portant les systèmes d'appuis ; de même, le support est en particulier constitué par deux longerons portant les systèmes de contre-appuis et formant une fourche ouverte à une extrémité, lesdits longerons étant assujettis par l'autre extrémité à une membrure équipée des moyens d'accouplement précités.

Selon une autre caractéristique, en vue de réaliser au moyen dudit engin le bottelage des matériaux, la forme comporte le long de sa surface intérieure des moyens de guidage d'au moins un organe de cerclage des bûches ; ces moyens peuvent être constitués par au moins une gorge s'ouvrant intérieurement dans la forme et dotée de moyens de rétention de l'organe de cerclage.

L'invention s'étend, en tant que telle, à une forme pour la manutention et le cas échéant le bottelage, comprenant les caractéristiques précitées ; elle s'étend également, en tant que tel, à un support de forme comprenant les caractéristiques précitées.

En outre, l'invention vise également un matériel de manutention et de bottelage de matériaux solides divisés, composé d'un support de forme du type précité et de plusieurs formes, chacune du type précité. Comme on le comprendra mieux plus loin, un tel matériel permet une rationalisation poussée et souple du chantier d'abattage.

La présente invention s'applique tout particulièrement dans le secteur de la sylviculture et s'étend à un procédé de manutention et de bottelage de bûches de bois (ou analogues), consistant :

. à charger les bûches dans une forme du type précité, dotée de moyens de guidage d'organe de cerclage,

. à assurer le cerclage desdites bûches au moyen desdits organes,

. à positionner un support de forme du type précité, de façon que ses deux systèmes de contre-appuis viennent se situer au-dessous et à l'aplomb respectivement des deux systèmes d'appuis de la forme,

. à soulever le support en vue d'amener les deux systèmes de contre-appuis et systèmes d'appuis à coopérer,

. à déplacer ledit support jusqu'à un lieu de débardage,

. à abaisser le support en vue de déposer la forme sur ses moyens de repos et de dégager les systèmes d'appui de celle-ci des systèmes de contre-appuis du support,

. à déplacer sur une faible course le support pour amener son second système de contre-appuis au-dessous et à l'aplomb du premier système d'appuis de la forme,

. à soulever le support en vue d'amener le second système de contre-appuis de celui-ci à coopérer avec le premier système d'appuis de la forme,

. et à poursuivre le soulèvement du support jusqu'au basculement de la forme, en vue de réaliser le déchargement de la botte.

D'autres caractéristiques, buts et

6                    <u>0154364</u>

avantages de l'invention ressortiront de la description qui
suit, en référence aux dessins annexés qui en présentent à
titre d'exemple non limitatif un mode de réalisation préférentiel ; sur ces dessins qui font partie intégrante de la présente description :

- la figure 1 est une vue en perspective d'ensemble d'un engin de manutention et de bottelage conforme à l'invention,

- la figure 2 est une vue en perspective d'une des parties constitutives de cet engin (support de
forme),

- la figure 3 est une coupe de détail
dudit support de forme,

- la figure 4 est une vue en perspective de l'autre partie constitutive dudit engin (forme),

- la figure 5 est une coupe longitudinale par un plan AA'de ladite forme,

- la figure 6 est une vue en plan de
ladite forme,

- la figure 7 en est une coupe transversale de détail par un plan BB',

- les figures 8a, 8b, 8c, 8d, 8e, 8f
et 8g sont des schémas illustrant le procédé de manutention
et de bottelage conforme à l'invention.

L'engin représenté à titre d'exemple
aux figures comprend essentiellement deux parties constitutives : une forme de réception des bûches 1 et un support de
forme 2.

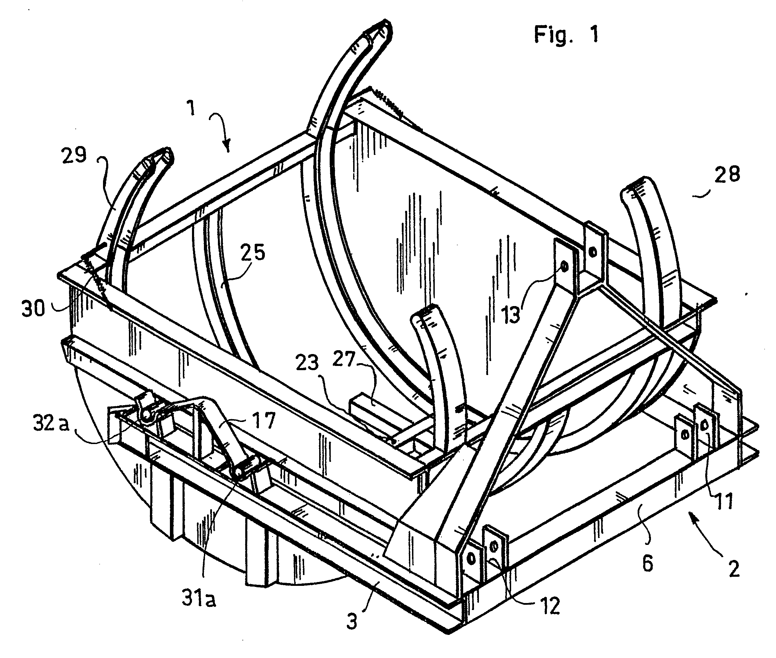

Le support de forme 2 (figure 1, figure 2 et figure 3) est constitué par deux longerons parallèles 3 et 4 réunis à une extrémité par une membrure 5, en vue
de former une fourche ouverte à l'opposé de ladite membrure.

La membrure 5 est en l'exemple composée d'une traverse 6 située au niveau des longerons 3 et 4
et de deux montants inclinés 7 et 8 entretoisés à leur extrémité haute. A leur base, les montants et les longerons sont
reliés par des goussets de renfort 9 et 10 qui portent chacun
une joue arrière 9a ou 10a, formant une butée de protection
pour la forme en cas de fausse manoeuvre.

7

0154364

(Par convention, on désigne par "avant" d'un organe le côté de celui-ci situé vers le tracteur et par "arrière" le côté opposé).

La traverse 6 porte deux organes d'attelage 11 et 12 aux deux points bas d'un système de relevage de tracteur (ou système analogue tel que équipement de type fourche à fumier prévu à l'avant de certains tracteurs), cependant que les montants 7 et 8 portent à leur extrémité haute un organe d'attelage 13 au point haut de ce système de relevage. De façon classique, ces organes sont constitués par des chapes dotées de clavettes.

Chaque longeron 3 et 4 présente en l'exemple une section transversale en forme de U, s'ouvrant latéralement vers l'extérieur de la fourche ; chacun est doté à son extrémité d'un sabot 14 à joues inclinées, en vue de faciliter la mise en place du support 2 par rapport à la forme 1.

Sur la face supérieure de chaque longeron 3 et 4, sont soudés des demi-paliers s'ouvrant vers le haut :

- deux demi-paliers avant 15a et 15b formant un premier système de contre-appuis pour la forme,
- deux demi-paliers arrière 16a et 16b formant un second système de contre-appuis.

Ces demi-paliers sont identiques, les deux demi-paliers de chaque système étant alignés. On a désigné par X l'axe défini par les deux demi-paliers 16a et 16b du second système.

Les demi-paliers disposés sur un même longeron sont reliés à une rampe 17 en forme de V renversé, qui est disposée entre ces demi-paliers de façon à guider vers ceux-ci les pivots de la forme lors de la mise en place.

En l'exemple, chaque paire de demi-paliers 15a, 16a (ou 15b, 16b) et la rampe 17 associée sont formées par une lame rigide, conformée de façon appropriée et soudée sur le longeron avec des plaques de renforts telles que 18.

Ces lames sont conformées pour former un léger retrécissement 19 à l'entrée de chaque demi-palier, de façon à assurer un verrouillage de la forme par encliquetage de ses pivots. Le rétrécissement 19 des paliers est adapté de sorte que, par déformation élastique de la matière, le poids de la forme à vide suffise pour engendrer l'introduction de ses pivots dans les demi-paliers 15a, 15b et 16a, 16b.

On conçoit que la structure extrêmement simple du support décrit et l'absence de tout système hydraulique en déterminent un coût très réduit. —

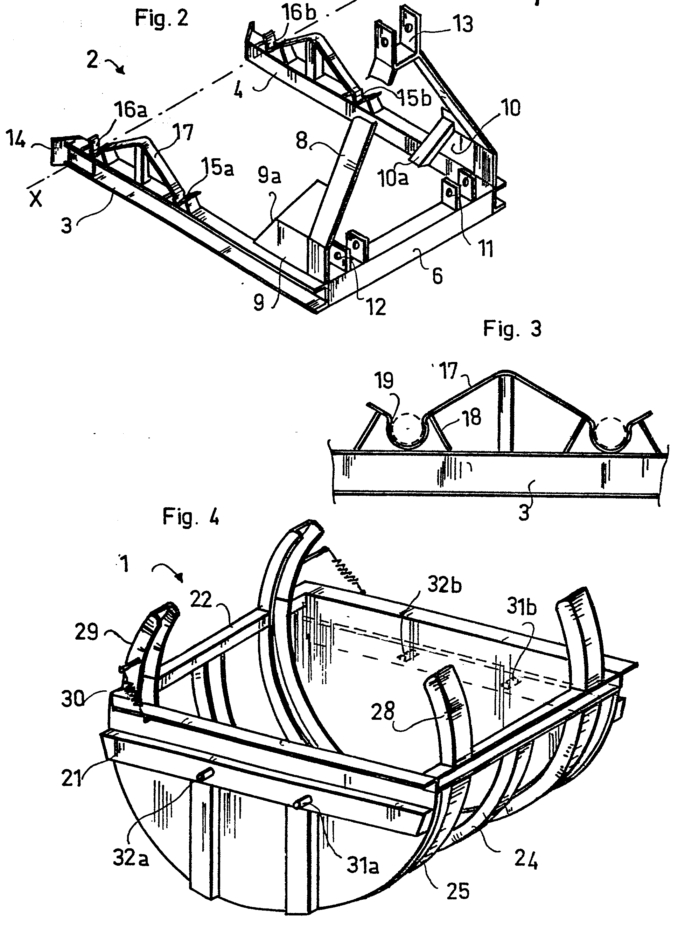

Par ailleurs, la forme 1 représentée aux figures 4, 5, 6 et 7 est constituée par un berceau de forme générale semi-cylindrique, de largeur (dimension transversale) légèrement inférieure à la distance séparant les longerons 3 et 4 du support.

Cette forme 1 comprend deux flancs latéraux formés par des flasques pleins tels que 20 renforcés par des raidisseurs tels que 21. L'un de ces raidisseurs 21 est horizontal et situé environ au 2/3 de la hauteur du flanc. Les flancs 20 et leurs raidisseurs 21 sont réunis par des entretoises transversales 22 et 23, au nombre de trois en l'exemple : deux 22 au niveau de la bordure haute des flancs et une 23 en partie basse.

Trois ceintures de maintien sont assujetties sur ces entretoises, l'une 24 dans le plan médian longitudinal, les deux autres telles que 25, de part et d'autre à une certaine distance des flancs. Ces ceintures de forme semi-circulaire s'étendent sur le pourtour du berceau et ont pour première fonction de retenir les bûches le long de la surface semi-cylindrique qu'elles délimitent.

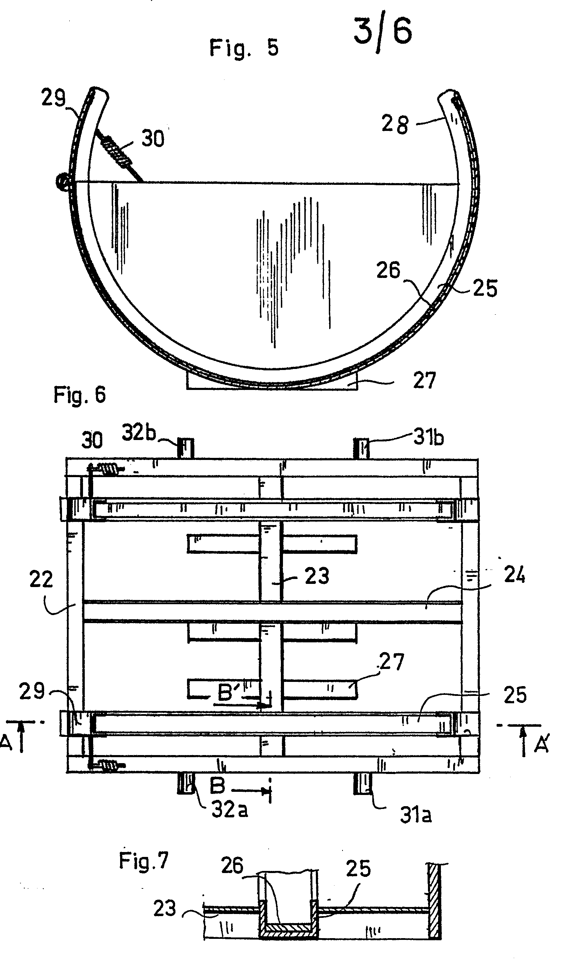

En outre, les ceintures 25 ont une seconde fonction consistant à guider et retenir des feuillards de cerclage des bottes. A cet effet, elles présentent chacune une section en forme de U s'ouvrant vers l'intérieur du berceau, comme le représente la figure 7. Elles forment ainsi une gorge de largeur correspondant à celle d'un feuillard de cerclage.

Au fond desdites gorges, sont assujettis des aimants permanents tels que 26, jouant le rôle de moyens de rétention du feuillard mis en place dans la ceinture 25. Ces aimants peuvent se présenter sous la forme de bandes souples collées dans la ceinture.

En outre, l'entretoise inférieure 23 porte dans son plan (situé au voisinage du plan horizontal tangent en partie basse du berceau) des barres horizontales telles que 27 en vue de former un piètement permettant à la forme de reposer stablement sur le sol.

Par ailleurs, la surface semi-cylindrique ajourée, que délimitent les ceintures, est prolongée au-delà de ses deux bordures supérieures 22 par des guides incurvés tels que 28 et 29, dirigés vers le haut et sensiblement de même courbure que ladite surface.

Les guides 28 situés vers l'avant sont fixes, tandis que les guides arrière 29 sont articulés sur les deux ceintures 25 qui les portent, en vue d'être rabattables vers l'extérieur. Des moyens élastiques tels que ressorts 30 sollicitent ces guides 29 vers leur position déployée.

Que la forme soit vide ou chargée, son centre de gravité se trouve situé au voisinage du plan transversal de symétrie T. De part et d'autre de ce plan T, la forme porte deux systèmes d'appuis, soudés sur les raidisseurs 21, de part et d'autre des flancs ; ces systèmes comprennent :

- deux pivots avant 31a et 31b disposés dans l'alignement l'un de l'autre et formant le premier système d'appuis,

- deux pivots arrière 32a et 32b disposés dans l'alignement l'un de l'autre et formant le second système d'appuis.

Ces pivots sont identiques entre eux et de diamètre adapté pour se loger dans les demi-paliers 15a, 15b, 16a, 16b du support.

Les pivots des deux systèmes sont disposés symétriquement par rapport au plan transversal de symétrie T et écartés de façon que les quatre pivots, respectivement 31a, 31b, 32a, 32b, puissent venir simultanément coopérer avec les quatre demi-paliers, respectivement 15a, 15b, 16a, 16b.

L'utilisation et le fonctionnement de l'engin ci-dessus décrit sont expliqués ci-après en référence aux figures schématiques 8a à 8g.

10 0154364

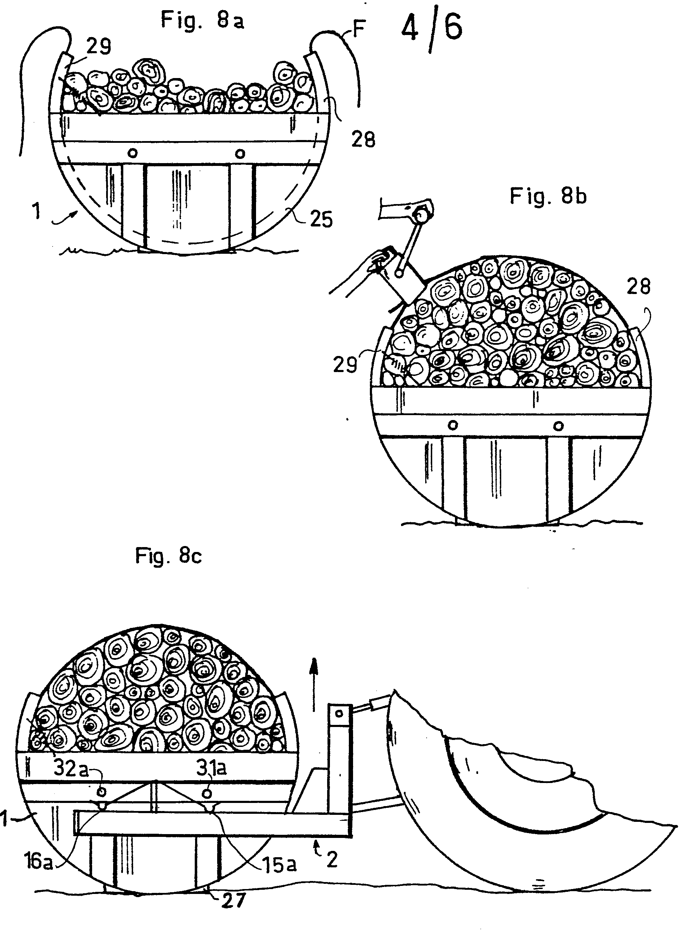

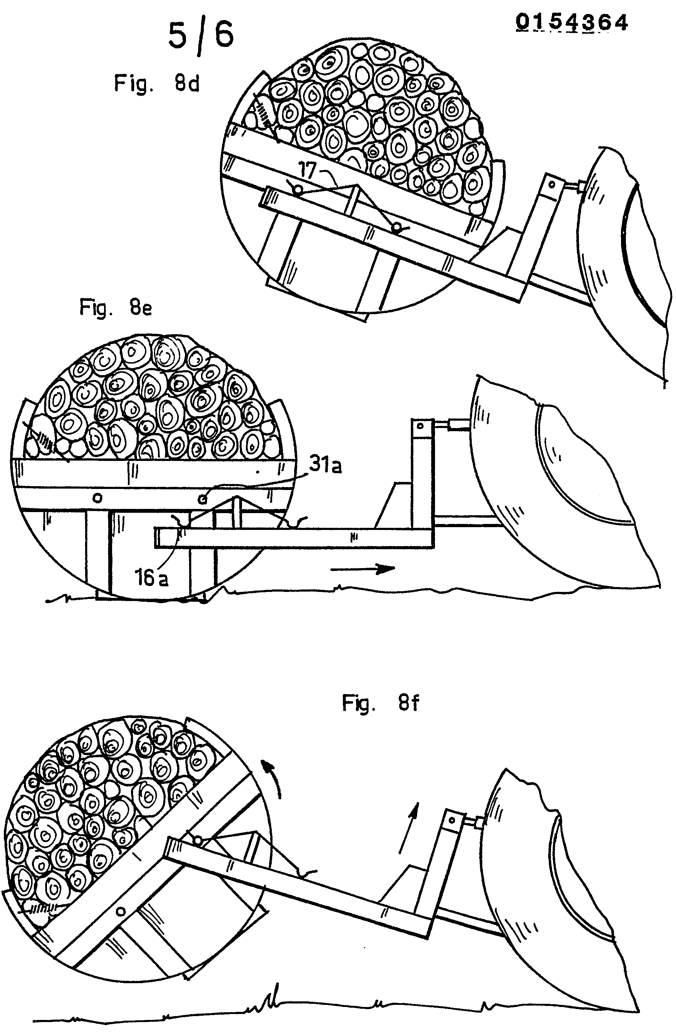

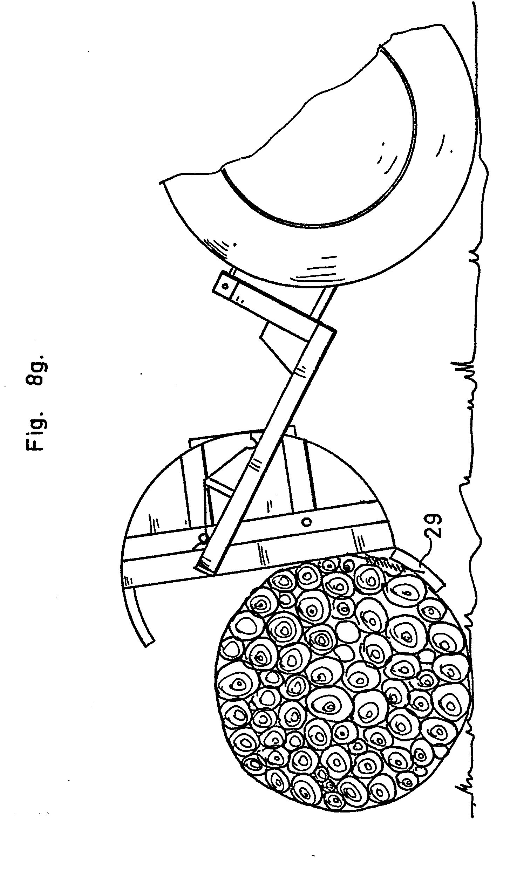

A la figure 8a, on aperçoit, en cours de remplissage, la forme 1 posée sur le sol par son piètement. La largeur de l'engin est adaptée à la longueur habituelle des bûches de consommation domestiques ($100 \pm 10$cm). Après mise en place des deux feuillards de cerclage F dans les ceintures 25, les bûches sont posées transversalement dans la forme jusqu'à la remplir.

Lorsque la forme est remplie jusqu'au niveau supérieur de ses guides 28 et 29 (qui maintiennent les bûches du haut), l'opérateur saisit les extrémités des feuillards et les sertit au moyen d'un appareil de type connu (figure 8b).

Il est à noter que, pendant ces opérations de bottelage, la présence du support 2 n'est pas nécessaire et celui-ci peut être utilisé pour transporter une botte réalisée préalablement.

On a pu constater que les bottes ainsi confectionnées présentaient un poids précis (la capacité de la forme 1 pouvant correspondre par exemple à 1 stère) et une excellente cohésion autorisant par la suite des manutentions aisées.

La figure 8c illustre la saisie de la forme et de la botte contenue dans celle-ci, au moyen du support 2 attelé sur le système de relevage d'un tracteur. La fourche que forme ce support est glissée de part et d'autre de la forme 1 au-dessous des pivots 31a, 31b, 32a, 32b jusqu'à ce que les demi-paliers 15a, 15b, 16a, 16b dudit support viennent respectivement se situer à l'aplomb de ces pivots.

Le système de relevage du tracteur est alors manoeuvré de façon à soulever le support 2 (figure 8d) ; les quatre demi-paliers de celui-ci viennent coopérer avec les quatre pivots de la forme, avec encliquetage. La rampe 17 et les bords évasés des demi-paliers assurent la pénétration automatique des pivots, même en cas d'imprécision de positionnement.

La forme et la botte peuvent ainsi être transportées vers le lieu de chargement, en général en bordure d'une route ou d'un chemin.

La forme est ensuite posée au sol sur

0154364

son piètement et le support 2 est déplacé vers l'avant sur une course égale à la distance des deux systèmes de pivots (figure 7e).

Le support est à nouveau levé de façon à provoquer la coopération des demi-paliers 16a, 16b avec les pivots 31a, 31b, et le basculement de la forme vers l'arrière (figure 8f).

En fin de basculement, les guides 29 s'effacent sous le poids de la botte et celle-ci tombe sur le sol. Elle pourra être aisément saisie par les organes de manutention traditionnels que possèdent les camions.

Pour le trajet de retour, les manoeuvres inverses sont effectuées afin de replacer la forme vide en position stable sur le support. Le poids à vide de celle-ci assure son encliquetage dans les demi-paliers et autorise son transport satisfaisant, sans soubresauts ni risques de chute.

Suivant le type de chantier, plusieurs formes telles que 1 pourront être adjointes à chaque support monté sur un tracteur. Ainsi, les deux premières opérations (chargement des bûches et cerclage) pourront être exécutées au moyen d'une ou plusieurs formes par un ou des bûcherons, cependant que les autres opérations (saisie, transport, débardage, retour) seront effectuées pour une botte préalablement confectionnée dans une autre forme. Le cas échéant, un tracteur peut être équipé de deux supports, l'un à l'arrière attelé à son système de relevage, l'autre à l'avant attelé à un équipement du type fourche à fumier.

REVENDICATIONS   0154364

1/ - Engin de manutention de matériaux solides divisés, composé d'au moins d'une forme (1) de réception desdits matériaux et d'un support de forme (2) pourvu de moyens d'accouplement (11, 12,13) à un système d'entraînement permettant de soulever ou d'abaisser ledit support et de le déplacer, ledit engin comprenant la combinaison des caractéristiques suivantes :

(a) la forme (1) comporte en partie basse des moyens (23, 27) de repos au sol,

(b) au-dessus du niveau de ces moyens de repos, la forme (1) est pourvue d'un premier système d'appuis sur le support (31a, 31b), en vue de son soutien le long d'une zone située d'un côté de son centre de gravité,

(c) au-dessus du niveau de ces moyens de repos, la forme (1) est pourvue d'un second système d'appuis sur le support (32a, 32b) en vue de son soutien le long d'une zone située de l'autre côté de son centre de gravité,

(d) le support (2) est doté d'un premier système de contre-appuis (15a, 15b) et d'un second système de contre-appuis (16a, 16b), adaptés pour pouvoir coopérer respectivement avec le premier système d'appuis (31a, 31b) et le second système d'appuis (32a, 32b) de la forme (1) en vue d'assurer un maintien stable de celle-ci,

(e) lesdits systèmes d'appuis et systèmes de contre-appuis sont adaptés pour pouvoir se dégager lors d'un écartement vertical vers le bas du support (2) par rapport à la forme (1),

(f) le premier système d'appuis (31a, 31b) de la forme (1) et le second système de contre-appuis (16a, 16b) du support (2) sont adaptés pour pouvoir coopérer l'un avec l'autre à la manière de tourillons et demi-paliers, en vue d'autoriser un pivotement de la forme autour d'un axe X défini par les contre-appuis dudit second système,

(g) le support (2) est ouvert du côté de ce second système de contre-appuis en vue d'autoriser le basculement de la forme (1) autour de l'axe X lorsque le premier système d'appuis (31a, 31b) est amené à coopérer avec le second système de contre-appuis (16a, 16b).

13                                     0154364

2/ - Engin selon la revendication 1, dans lequel :

. les deux systèmes de contre-appuis du support (2) sont identiques et constitués, chacun, par deux demi-paliers (15a, 15b ; 16a, 16b) s'ouvrant vers le haut et agencés dans l'alignement l'un de l'autre de part et d'autre du support,

. les deux systèmes d'appuis de la forme sont identiques et constitués, chacun, par deux pivots (31a, 31b ; 32a, 32b), de diamètre adapté aux demi-paliers précités et agencés dans l'alignement de part et d'autre de la forme pour venir en correspondance avec lesdits demi-paliers.

3/ - Engin selon l'une des revendications 1 ou 2, dans lequel la forme (1) est constituée par un berceau, ouvert sur sa face supérieure et comprenant deux flancs latéraux portant les systèmes d'appuis (31a, 31b ; 31a, 32b).

4/ - Engin selon l'une des revendications 1, 2 ou 3, dans lequel le support (2) est constitué par deux longerons (3, 4) portant les systèmes de contre-appuis (15a, 15b ; 16a, 16b) et formant une fourche ouverte à une extrémité, lesdits longerons étant assujettis par l'autre extrémité à une membrure (5) équipée des moyens d'accouplement (11, 12, 13) précités.

5/ - Engin selon les revendications 2, 3 et 4 prises ensemble, caractérisé en ce que :

. les deux pivots (31a, 31b ; 32a, 32b) portés par chaque flanc de la forme sont situés dans un même plan horizontal,

. les deux demi-paliers (15a, 15b ; 16a, 16b) portés par chaque longeron (3, 4) du support sont associés à une rampe (17) en forme de V renversé, disposée entre lesdits demi-paliers pour guider les pivots vers ceux-ci lors de leur mise en place.

6/ - Engin selon l'une des revendications 1, 2, 3, 4 ou 5, destiné à être attelé à un tracteur doté d'un système de relevage trois points, dans lequel les moyens d'accouplement précités comprennent trois organes

0154364

d'attelage (11, 12, 13) auxdits systèmes de relevage trois points.

7/ - Engin selon l'une des revendications précédentes, pour la manutention et le bottelage de matériaux constitués en particulier par des bûches de bois, caractérisé en ce que la forme (1) comporte le long de sa surface intérieure des moyens de guidage (25) d'au moins un organe de cerclage des bûches.

8/ - Engin selon la revendication 7, caractérisé en ce que les moyens de guidage (25) précités sont constitués par au moins une gorge s'ouvrant intérieurement dans la forme et dotée de moyens de rétention (26) de l'organe de cerclage.

9/ - Engin selon la revendication 8, permettant de réaliser le bottelage des matériaux au moyen de feuillards de cerclage, caractérisé en ce que les moyens de rétention précités sont constitués par des aimants permanents (26) assujettis au fond de chaque gorge.

10/ - Engin selon les revendications 3 et 8 prises ensemble, caractérisé en ce que le berceau constituant la forme (1) comprend deux flancs latéraux, des entretoises transversales (22, 23) réunissant les bords desdits flancs et des ceintures de maintien (24, 25) assujetties sur ces entretoises et sur le pourtour du berceau, l'une au moins desdites ceintures (25) présentant une section en forme de U s'ouvrant vers l'intérieur en vue de former une gorge précitée.

11/ - Engin selon l'une des revendications 7, 8, 9 ou 10, dans lequel la forme (1) présente une section longitudinale semi-circulaire et comprend deux flasques pleins, une surface semi-cylindrique ajourée formée par des entretoises transversales (22, 23) et des ceintures de maintien (24, 25), et des moyens de repos au sol constitués par un piètement (23, 27) assujetti en partie basse de la forme au voisinage du plan horizontal tangent à celle-ci.

12/ - Engin selon la revendication 11, caractérisé en ce que sa surface semi-cylindrique ajourée est prolongée au-delà de ses deux bordures supérieures par des guides incurvés (28, 29) dirigés vers le haut et sensiblement de même courbure que ladite surface, les guides (29) situés au-delà d'une des bordures étant articulés en vue d'être rabattables vers l'extérieur et associés à des moyens élastiques (30) les sollicitant vers leur position déployée.

13/ - Engin selon l'une des revendications précédentes, caractérisé en ce qu'il comprend des moyens de verrouillage (19) de la forme (1) sur le support (2), permettant d'assurer un verrouillage par encliquetage des systèmes d'appuis et de contre-appuis.

14/ - Engin selon les revendications 5 et 13 prises ensemble, caractérisé en ce que les deux demi-paliers (15a, 15b ; 16a, 16b) et la rampe associée (17), portés par chaque longeron (3, 4) sont formés par une lame rigide conformée de façon appropriée, les moyens de verrouillage étant constitués par un léger rétrécissement (19) à l'entrée de chaque demi-palier.

15/ - Procédé de manutention et de bottelage de bûches de bois ou analogues, au moyen d'un engin conforme à la revendication 7, caractérisé en ce qu'il consiste :

. à charger les bûches dans la forme de l'engin,

. à assurer le cerclage desdites bûches au moyen des organes de cerclage,

. à positionner le support de forme (2) de l'engin, de façon que ses deux systèmes de contre-appuis (15a, 15b ; 16a, 16b) viennent se situer au-dessous et à l'aplomb respectivement des deux systèmes d'appuis de la forme (31a, 31b ; 32a, 32b),

. à soulever le support (2) en vue d'amener les deux systèmes de contre-appuis et systèmes d'appuis à coopérer,

. à déplacer ledit support jusqu'à un lieu de débardage,

. à abaisser le support (2) en vue de déposer la forme (1) sur ses moyens de repos (23, 27) et de dégager les systèmes d'appui de celle-ci des systèmes de contre-appuis du support,

. à déplacer sur une faible course le support (2) pour amener son second système de contre-appuis (16a, 16b) au-dessous et à l'aplomb du premier système d'appuis (31a, 31b) de la forme,

$0154364$

. à soulever le support en vue d'amener le second système de contre-appuis de celui-ci à coopérer avec le premier système d'appuis de la forme,

. et à poursuivre le soulèvement du support jusqu'au basculement de la forme en vue de réaliser le déchargement de la botte.

16/ - Procédé de manutention et de bottelage conforme à la revendication 15, dans lequel on utilise un engin doté de plusieurs formes, les deux premières opérations (chargement des bûches et cerclage) étant mises en oeuvre au moyen d'une forme en vue d'y constituer une botte, tandis que les autres opérations sont effectuées simultanément au moyen d'une autre forme contenant une botte préalablement confectionnée.

Fig. 1

Fig. 2

Fig. 3

Fig. 4

Fig. 5

29

30

28

26    25

27

Fig. 6

30   32b       31b

22              23        24

29      27      25

B'

A            A'

29                  25

B

32a        31a

Fig. 7

26    25

23

Fig. 8a

Fig. 8b

Fig. 8c

Fig. 8d

17

Fig. 8e

31a

16 a

Fig. 8f

Fig. 8g.

29

Office européen
des brevets

**RAPPORT DE RECHERCHE EUROPEENNE**

## DOCUMENTS CONSIDERES COMME PERTINENTS

| Catégorie | Citation du document avec indication, en cas de besoin. des parties pertinentes | Revendication concernee | CLASSEMENT DE LA DEMANDE (Int Cl 4) |
|---|---|---|---|
| A | DE-B-1 053 410 (THE YALE & TOWNE MANUFACTURING CO.) * Colonne 1, ligne 50 - colonne 4, ligne 21; figures 1-9 * | 1-5,13 | B 66 F 9/19 A 01 G 23/00 |
| | --- | | |
| A | US-A-2 744 642 (SEWELL) * Colonne 2, ligne 31 - colonne 4, ligne 72; figures 1-6 * | 1,2,5, 13 | |
| | ----- | | |

| DOMAINES TECHNIQUES RECHERCHES (Int. Cl.4) |
|---|
| B 66 F B 62 D B 60 P A 01 G |

Le présent rapport de recherche a été établi pour toutes les revendications

| Lieu de la recherche LA HAYE | Date d'achèvement de la recherche 28-05-1985 | Examinateur HERYGERS J.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82